# EUROPEAN PATENT APPLICATION

(11) **EP 2 763 053 A1**
(43) Date of publication of application: **06.08.2014**
(21) Application number: 13153872.0
(22) Date of filing: 04.02.2013
(51) Int. Cl.: G06F 17/30

(54) **Shorthand for data retrieval from a database**

(71) Applicant: Creative Inputs Ltd., 44109 Kfar-Saba (IL)
(72) Inventor: Teicher, Mordechai, Hod-Hasharon (IL)
(74) Representative: Weihs, Bruno Konrad

(57) **Abstract**

A method and apparatus for convenient and fast entry of a search string for searching a database. A subset of the alphabet (such as the vowels) is used for entry of a search string, and database matches are determined according to the appearance of the subset characters in the search fields of the database records. The use of the alphabet subset reduces the size of the entry keypad and simplifies user entry of the search string.

## Description

### FIELD

The present invention relates to data retrieval from a database by text query, and in particular to such data retrieval under circumstance that make conventional text query entries inconvenient or unsafe.

### BACKGROUND

Users of mobile communication devices often need to retrieve data from a database. For example, a user may want to place a phone call and needs to retrieve the phone number from a contact database stored in his mobile phone; or he may want to navigate by car to a restaurant and needs to retrieve data from a database of a navigation service that is accessible via the mobile network.

Retrieval of data from a database often requires entering a text string to be interpreted by an application program, such as a phone dialer or a navigation program. In response, the application program identifies records from the database that match the entered string, and presents the identified records to the user for selection or approval. Upon receiving the user selection or approval, the application program performs an action, such as dialing a phone number or navigating to a desired destination.

The small size of many mobile devices affords only small-sized keypad and screen. Many mobile devices feature a touchscreen whose small area is shared between keypad and display functionalities. Many users of mobile devices find it difficult to read the tiny soft keys displayed on the screen and to accurately tap the desired keys. Such difficulties are further increased when the mobile device is used when driving a car, for example for placing a phone call or navigating to a desired destination, in which case text data entry becomes not only inconvenient but also unsafe.

Voice commands offer a relatively convenient and safe alternative to key stroke entry for some users, while other users find voice commands inaccurate and frustrating to use. Therefore, it would be advantageous to have a more convenient and safer way to enter text into a mobile device for retrieving data from a database.

### SUMMARY

The present invention provides an easy and safe way for entering text into a mobile device for retrieving data from a database. In embodiments of the invention, a keypad having a proper subset of the alphabet is presented to the user for entering characters of a search query.

The present disclosure describes how embodiments of the present invention use a relatively-small subset of an alphabet (not more than 50% of the characters of the alphabet) in a text query for data retrieval from a database. In certain non-limiting embodiments of the invention, the subset includes only vowels. Users familiar with a language readily distinguish its vowels from its consonants and find it easy to pick out and enter the vowels of a name or other item as a query search string. The term *"search string*" herein denotes a string of text characters entered by a user, which is then used by a database search engine to locate one or more desired records in the database. Examples discussed below show how a user can quickly become proficient in rapidly and accurately entering compact search strings based on such alphabetic subsets. The reduced size and complexity of the keypads needed for entering alphabetic subsets further improves the convenience, speed, and accuracy of shorthand searches according to embodiments of the present invention.

After the user enters a search string containing a sequence of characters of the subset, a search program employing a processor searches the database to find records having the same sequence within a predefined function of the contents of text fields in the records. A match occurs when the characters of the search string appear interspersed in the predefined function in the same order as the characters appear in the search string. Because the predefined function of the contents of the text fields in general contain characters from the full alphabet, the characters of the subset do not in general appear contiguously in the predefined function. Below are examples illustrating records, text fields, predefined functions, search strings, and matching operations according to various embodiments of the present invention.

### DEFINITIONS

The term "*alphabet*" herein denotes a set of non-numeric text characters used in a written natural language to express spoken sounds including words and names in that language. The term *"text"* herein denotes an ordered character string containing at least one character selected from a predefined alphabet.

"*Small mobile device",* also abbreviated "mobile device", relates herein to a device that can be conveniently carried by a person or integrated within a vehicle. Examples of a mobile device are a portable cellular telephone, a portable navigation device, or a navigation device that is fixed within a dashboard of a vehicle.

"*Touchscreen*" denotes herein a screen that is sensitive to touch by a finger and/or stylus. Touchscreens are used by users as an input/output (I/O) interface, and have the advantage of dynamically modifying the appearance and functionality of the screen's input operation according to the context. The terms "*screen*" and "*display*" are herein used interchangeably to denote a graphical output device. A screen may be a touchscreen or be insensitive to touch.

The terms *"soft key*" and *"button",* herein denote a key temporarily drawn on a touchscreen as a character, character string, icon or picture. A user presses a soft key to enter data or to execute a command. A *"soft keypad*" is includes multiple soft keys on a touchscreen. The term *"hard key*" herein denotes a hardware key or button, such as a key of a conventional keyboard. The term "*key*" without any modifiers herein denotes either a soft key or a hard key. A "*hard keypad*" is a set of hard keys. The term "*keypad*" without any modifiers herein denotes any of: a soft keypad; a hard keypad; or a combination of soft keys and hard keys.

The terms "*touch*", "*press*", "*tap*", and "*stroke*" herein interchangeably denote an action by a user for activating a key, by finger, stylus, voice command, or other means.

An embodiment of the present invention provides a phone dialer for a mobile phone. A subset of the alphabet is selected to be small enough to provide keys of sufficiently-large size, with the alphabet subset's characters chosen to be easy for users to identify within conventional text strings, even when not viewing the text strings on a display. Such requirements are satisfied, for example for users of the English language, by a soft keypad that displays the vowels "A", "E", "I", "O", "U", as well as a few control keys such as "Search" or "Contacts". An alphabet subset of five to twelve characters, for example, can be displayed, on most small screens of mobile phones, as large soft keys that can be easily and accurately recognized and pressed. On the other hand, many users will find it intuitive and easy, even without training, to start with the string "*William Smith*" and get from it a search string of vowels "IIAI"; and to start with the string "*John Doe*" and get from it a search string "OOE"; and then proceed by pressing the appropriate keys for a *dial-by-vowel* process according to embodiments of the present invention.

In practice, using vowels to represent names will often yield more than one match. For example, both "*Billy Wang*" and "*Tim Starr*" match the vowel string "IA". Therefore, when entering a string of vowels, the user will often be prompted, according to certain embodiments of the invention, with several names for further selection, such as by being prompted to press one of several soft buttons bearing contacts' names. When the number of results is small, for example up to five, such results can be displayed on a single small touchscreen as large buttons for further selection. A larger number of results may occupy a few screens, requiring paging or scrolling, which is less convenient. However, since, for a given contact database of a user, all name entries can be analyzed in advance, measures can be taken to reduce such inconvenience, including, but not limited to:

(1) the user may be presented with the instances of excessive multiple name matches for certain strings of vowels, and delete some obsolete entries from the database, or hide them from the present dial-by-vowel option, or prioritize their order of appearance on multiple screens;

(2) the alphabet subset may be extended, as the non-limiting example of also including one or more of "H", "W", "Y";

(3) the user may be encouraged to consistently use full names in his contact list, for example replace "*Bill*" with "*William*". The need for such measures may depend on the size of the screen, the size of the contact list, the specific contents in the contact list, and the database language.

The alphabet subset used for data entry must allow for effective data retrieval, must be easy to intuitively recognize by users within common vocabulary even without viewing a written or displayed version of the target term, and must be sufficiently compact to justify a shorthand entry, instead of conventional text data entry. Regarding compactness, it will be assumed that an alphabet subset than includes not more than half of the full alphabet characters will be considered compact.

Embodiments of the present invention thus provide a method for retrieving data from a database, the database including a plurality of database records, each database record having one or more text fields containing ordered characters from an alphabet, the method including: (a) identifying to a user a predefined subset of the alphabet, the subset including no more than the smaller of: half of the alphabet or sixteen characters of the alphabet; (b) receiving from the user a sequence of one or more characters of the subset; (c) retrieving, by a processor, a non-negative integer number of database records, wherein each retrieved database record includes the characters of the sequence interspersed within a predefined function of at least one text field of the database record, such that the interspersed characters appear in the same order as the characters of the sequence; and (d) if the non-negative integer number is at least one, presenting the retrieved database records to the user. In a specific embodiment the database is a contact database and the predefined function concatenates name fields of the database record; in such a case, the method may continue with receiving a user input that selects a selected database record from the retrieved database records, extracting an address from the selected database record, and initiating a communication session according to the address, the communication session may include one of: a telephone call, a short text message, an email, an instant messaging session, a social network message, or a multimedia message.

The character subset may be identified to the user by displaying the subset as a keypad on a touch screen, or by displaying the subset on a set of physical keys of a hard keypad. Examples of the character subset include the vowels a,e,i,o, and u, and optionally also one or more of the characters h, y, or w. In addition to the characters of the subset, a respective input device may also include control characters.

A specific case of interest thus relates to a method for initiating a communication session from a mobile device. The mobile device includes a storage device that stores a contact database, the database including a plurality of database records, each database record including a contact identifier in the form of an ordered set of characters from an alphabet, and address data effective for initiating a communication session. The method includes: (a) identifying to a user a predefined subset of the alphabet, the subset including no more than the smaller of: half of the alphabet or sixteen characters of the alphabet; (b) receiving from the user a sequence of one or more characters of the subset; (c) retrieving a non-negative integer number of database records, wherein each retrieved database record includes the characters of the sequence interspersed within the contact identifier of the retrieved database record, such that the interspersed characters appear in the same order as the characters of the sequence; and (d) if the non-negative integer number is at least one, then: (i) identifying to the user the retrieved database records, (ii) receiving from the user a command related to a selected record of the retrieved database records, and (iii) initiating a communication session according to address data included in the selected record. The communication session may include one of: a telephone call, a short text message, an email, an instant messaging session, a social network message, or a multimedia message.

A preferred embodiment of the present invention is in the form of a mobile communication device that includes: (a) a communication module; (b) a storage device storing a contact database, the database including a plurality of database records, each database record including a contact identifier in the form of an ordered set of characters from an alphabet, and address data; (c) an input device identifying to a user a predefined subset of the alphabet, the subset including no more than the smaller of: half of the alphabet or sixteen characters of the alphabet; and (d) a processor programmed to initiate a communication session by: (i) receiving from the input device a sequence of one or more characters of the subset, (ii) retrieving a non-negative integer number of database records, wherein each retrieved database record includes the characters of the sequence interspersed within the contact identifier of the retrieved database record, such that the interspersed characters appear in the same order as the characters of the sequence, and, (iii) if the non-negative integer number is at least one, then: (A) identifying to the user the retrieved database records, (B) receiving from the input device a command related to a selected record of the retrieved database records, and (C) activating the communication module for initiating a communication session according to address data included in the selected record. The communication session may include one of: a telephone call, a short text message, an email, an instant messaging session, a social network message, or a multimedia message.
The input device may be, for example, a soft keypad that includes the subset characters displayed on a touch screen, or a hard keypad including physical keys displaying the subset characters.

### BRIEF DESCRIPTION OF THE DRAWINGS

The present invention will be understood and appreciated more fully from the following detailed description, taken in conjunction with the drawings in which:

Fig. 1A illustrates an English-language keypad according to an embodiment of the present invention.

Fig. 1B illustrates an English-language keypad according to another embodiment of the present invention.

Fig. 1C illustrates a Russian-language keypad according to yet another embodiment of the present invention.

Fig. 1D illustrates a German-language keypad according to still another embodiment of the present invention.

Fig. 2A illustrates a method according to an embodiment of the present invention.

Fig. 2B illustrates a method according to another embodiment of the present invention.

Fig. 2C illustrates a method according to yet another embodiment of the present invention.

Fig. 3A and Fig. 3B illustrate selection screens according to certain embodiments of the present invention.

Fig. 3C and Fig. 3D illustrate dialing screens according to certain embodiments of the present invention.

Fig. 4 illustrates a method according to yet another embodiment of the present invention.

Fig. 5A and Fig. 5B illustrate data tables according to an embodiment of the present invention.

Fig. 6 illustrates a method according to an embodiment of the present invention.

Fig. 7 illustrates a keypad and display unit according to an embodiment of the present invention.

Fig. 7A illustrates a compact keypad according to an embodiment of the present invention.

Fig. 8 illustrates a hardware block diagram according to embodiments of the resent invention.

### DETAILED DESCRIPTION

Various embodiments described below with reference to the drawings focus on the non-limiting exemplary application of a phone dialer. Similar embodiments are intended to serve in other applications requiring data retrieval via queries using only a compact subset of the alphabet.

### SEARCH CONVENTIONS

In the known art, a database search identifies and optionally retrieves records matching criteria entered by a user via a query. Queries often include text entered by the user. Sometimes, all the text in a record is searched, while in other cases only a certain field or fields containing text are searched, for narrowing the search to only pertinent data. For example, a contact database may include text fields, such as **<first_name>, <last_name>, <job_title>, <home_address>, <work_address>, <email>, <phone>,** etc. In the example of a phone dialer, searching though all fields of such a contact database may yield many irrelevant results by finding matches in street names when looking for matches within person names. Accordingly, in the non-limiting embodiment of a phone dialer described below, matches are sought only within the concatenation of the predefined fields **<first_name>** + **<las**t**_name>.** The user-entered text to be matched is typically referred to as the *search string,* and corresponds to the fields being searched. In a typical current search on these predefined fields, a user who wants to find a record with "William" as **<first_name>** and "Smith" as **<las**t**_name>** enters the search string "William Smith". Other conventions are also used, for example including a middle name, or starting with the last name, or selecting a company name when the personal name fields are empty, etc. Such conventions are typically configured by application programmers or by the user, according to application specifics or personal preferences, respectively.

### EXEMPLARY SOFT KEYPADS

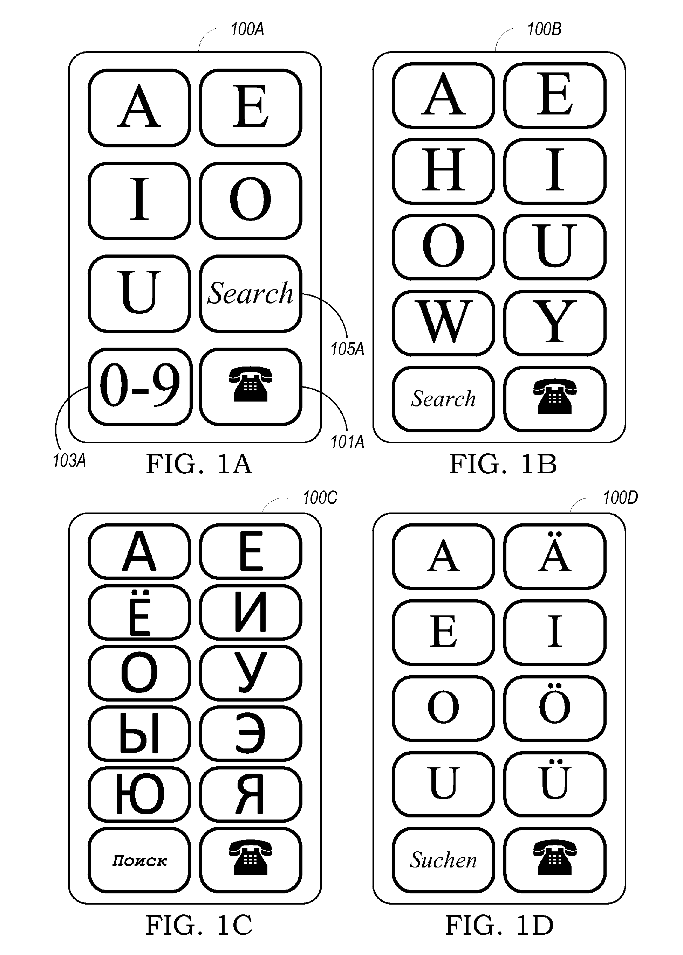

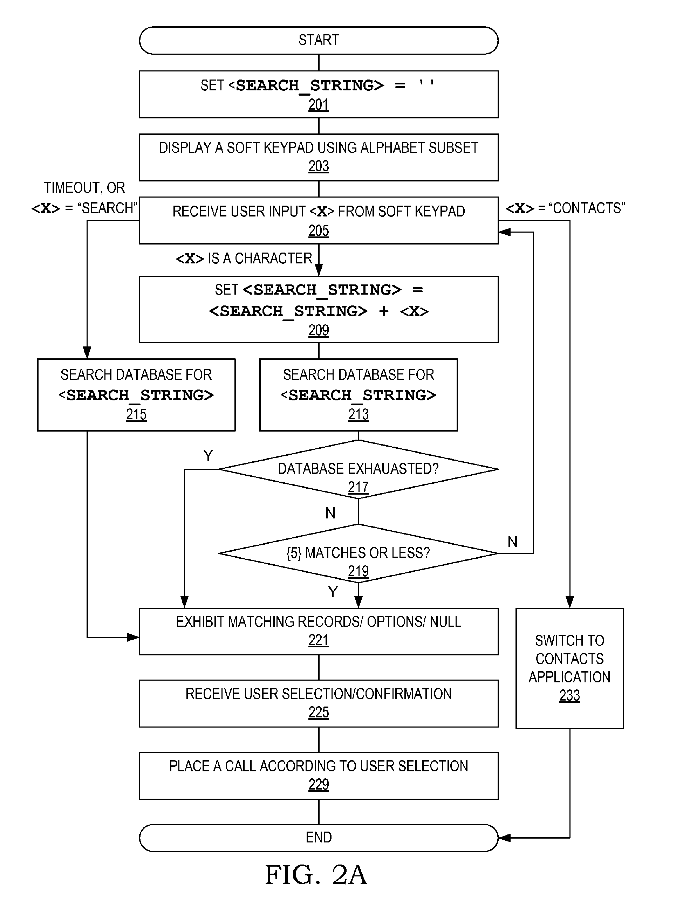

Reference is made to Figs. 1A-1D which conceptually illustrate exemplary soft keypads according to certain embodiments of the present invention. In related embodiments, keypads occupy all or part of a touchscreen, where another part of the screen (not shown in the drawings) may be used for displaying the string of characters that have been already entered by the user by pressing the soft keys, as well as prompts, hints or instructions. A keypad **100A** utilizes the Roman (Latin) alphabet and includes the vowels "A", "E", "I", "O", and "U". The "Search" button **105A** is used to explicitly initiate a search for matches according to the search string entered so far, while a button **101A** with the telephone icon (a "Contacts" button) allows the user to switch to a full keyboard or standard contact application that does not implement the teachings of the present disclosure (see Figs. 2A-2B below). A "0-9" button **103A** allows the user to switch to a numeric dialing keypad. In a related embodiment, a keypad **100B** includes additional characters "H", "U", "W" to the usable alphabet subset, in comparison with the alphabet subset of keypad **100A.** Such an addition may be helpful where the contact database is very large, as well as for users that find it easy to intuitively identify such extra letters within names. A keypad **100C** and a keypad **100D** illustrate exemplary keypads devised for users of the Russian (Cyrillic) and German alphabets, respectively.

### DIALING PROCESS

Reference is now made to Fig. 2A, which illustrates a method according to an embodiment of the invention, for using a keypad such as keypads **100A - 100D** (Figs. 1A-1D), for placing a phone call to a desired contact. The following description relates specifically to keypad **100A** (Fig. 1A). The procedure is initiated when a dialer according to an embodiment of the invention is activated by the phone's operating system (not shown in Fig. 2A). In a step **201** an input search string **(<SEARCH_STRING>)** is initialized to an empty string. In a step **203,** a soft screen, such as screen **100A** (Fig. 1A), is displayed to the user for entering a character from the subset (a vowel in the present example) or a control entry such as a "Search" button **105A** or "Contacts" button **101A.** The display in step **203** also serves to identify the characters of the alphabetic subset to the user, such as by including the characters of the subset on soft keys. In other embodiments of the invention, the characters of the alphabetic subset may be identified to the user in different ways, such as via hard keys or synthesized speech. In a step **205,** a user entry **<X>** from a single key stroke is expected to be received. If no input is received within a predetermined time, such as ten seconds in a non-limiting example (i.e. a timeout situation), or **<X>** represents "Search" button **105A** (a control key - see keypad **100A),** then in a step **215** a search is initiated according to the current content of the input search string (herein denoted as **<SEARCH_STRING>).** If **<X>** represents "Contacts" button **101A,** then the current input screen is replaced with a conventional keypad that includes the entire alphabet for data entry. In a related embodiment, the current process is terminated or suspended, and the operating system is called to switch to a default contact application that allows conventional data entry using the entire alphabet. If **<X>** is a keypad character (a vowel in this embodiment), then in a step **209 <X>** is appended to the end of the previous input search string; for example, if the previous input search string was "IIA" and the current entry **<X>** is the subset character "I", then the input search string becomes "IIAI".

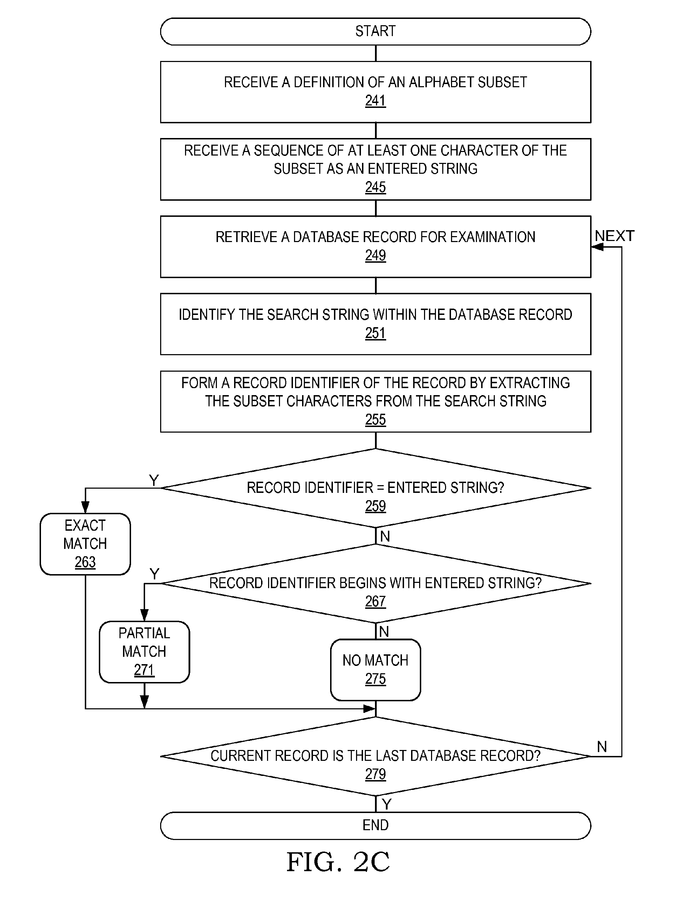

In a step **213** the contact database is searched for names (represented by the concatenated string **<first_name>** + **<last_name>)** matching the current input search string. According to various embodiments of the present invention, the following criteria are applied to determine a match: a match occurs either when the current input search string equals the entire string of alphabetic subset characters (in this example, the vowels) extracted in order from the name (*exact match*), or when the current input search string equals only the beginning of the string of alphabetic subset characters (in this example, the vowels) extracted in order from the name (*partial match*). In the present non-limiting example, for the name "William Smith", the input search string "IIAI" is an exact match for the vowels extracted in order from the name, while "I", "II" and "IIA" are partial matches. It will be appreciated that in the present exemplary embodiment, both an exact match and a partial match are considered a match, while is some other examples or embodiments, only an exact match may be considered a match, which may be determined by the application programmer or be set by the user according to personal preferences. Other embodiments of the present invention effect the same matching without directly extracting the alphabetic subset characters from the names. Matching methods according to embodiments of the invention are further elaborated below with reference to Fig. 2C in the discussion below on "Exact and Partial Matching".

In a step **217,** the current input search string is checked against the database to find out whether the database has been exhausted so that no additional input has the potential to further narrow the search results. For example, if the current search string is "IIAI" and there are no matches in the database for any of "IIAI[AEIOU]" (i.e. "IIAIA", "IIAIE", "IIAII", "IIAIO" or "IIAIU"), then the database is considered to be exhausted. If the database is found to be exhausted, then the process branches to a step **221,** otherwise it continues to a step **219.**

In step **219** the number of matches is counted and compared against a predefined parameter, 5 in the present example, to determine whether the display of the names of the current matches may fit within a single screen in the form of sufficiently-large buttons. Thus {5} represents a parameter that depends on the screen size versus the minimum button size that is still convenient to view and press, and may be set by the application programmer and/or by the user according to personal preferences. If, in step **219,** the number of matches is found too large for occupying the screen, the method branches back to step **205,** waiting for the user's entering the next vowel into the soft keypad.

The search in step **215** is similar to that of step **213,** except that it is followed directly by step **221** instead of going through step **217.**

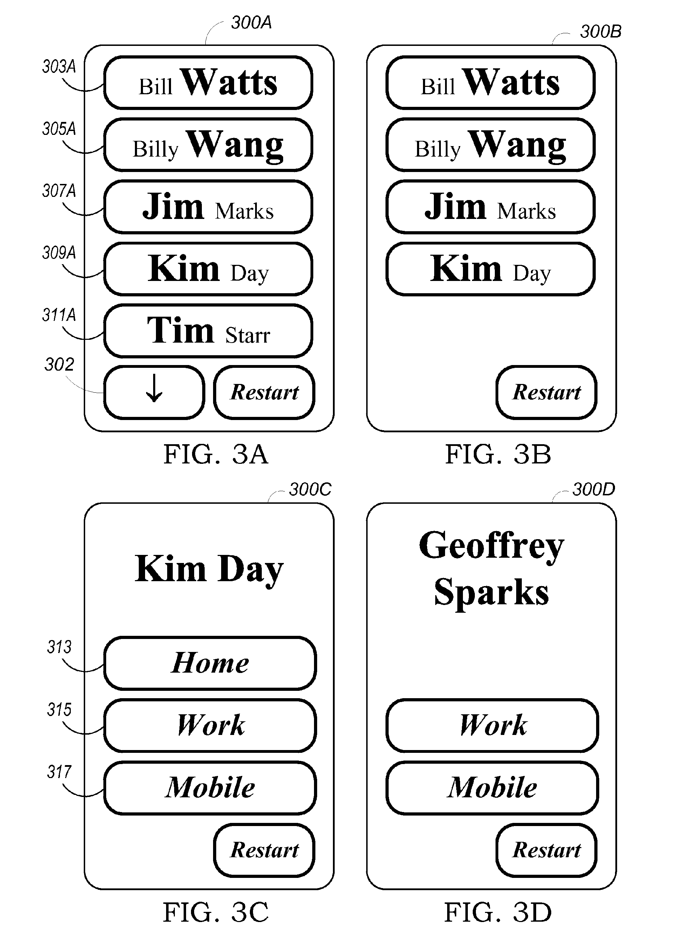

In step **221,** the matches found in step **213** or step **215** are exhibited on the mobile device's screen as buttons that can be pressed for further selection and approval, as will be discussed below with reference to Figs. 3A-3D. In a related embodiment, the matched names are presented to the user aurally, via text-to-speech technology, to which the user responds with a voice selection. Instead of exhibiting a name list, step **221** may exhibit a null list if no match has been found, and may also provide the user with additional options, such as pressing a "Restart" button (not shown) for restarting the search in case of a user mistake in the character entry.

Matches that have successfully passed step **219** will occupy a single screen, in step **221,** while those that stem from step **215** may occupy one screen or several screens, the latter possibly requiring paging or scrolling in order to reach and press the desired contact. In a step **225,** a key pressed by the user (or a voice command) identifies the selected name or confirms placing a call in case that only a single match has been found. In a step **229** a call is placed according to the user selection or confirmation in step **225.**

### GENERAL DATA RETRIEVAL FROM A DATABASE

Additional embodiments of the present invention are useful in other applications of data retrieval from a database while using small screens. Representative non-limiting examples include extracting an address from a retrieved record of a contact database, or entering an address into a navigation device that employs a built-in or server-based address database. In another embodiment of the invention, the extracted address is used to initiate a communication session, such as: a telephone call; a short text message, such as via the Short Message Service (SMS); an email or instant messaging session; a social network message; or a multimedia message.

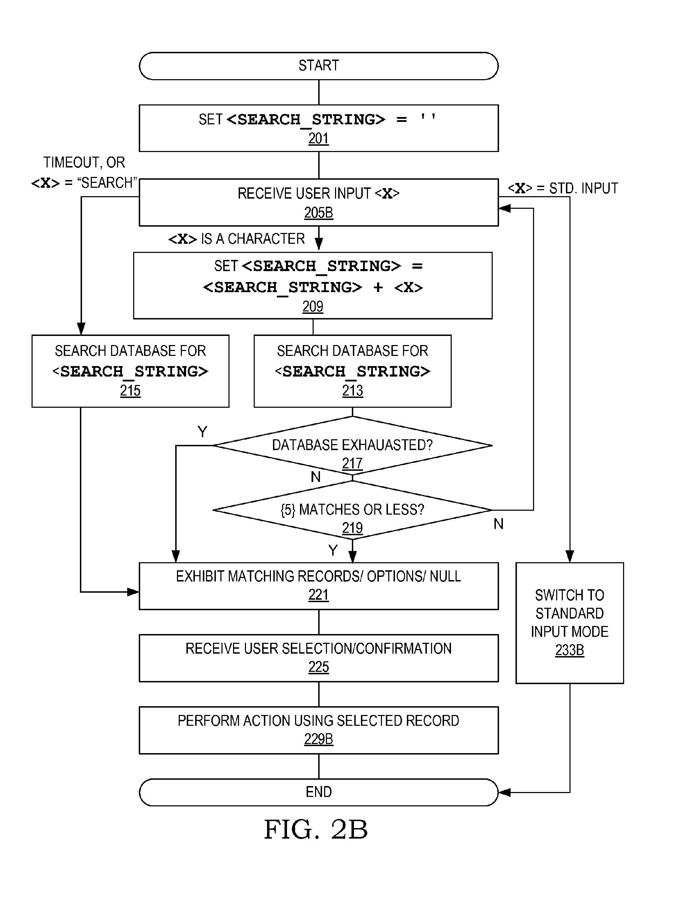

Fig. 2B illustrates a more general case of data retrieval from a database using a small screen, according to further embodiments of the present invention. Steps of Fig. 2B are similar to those of Fig. 2A, except as noted in the following:

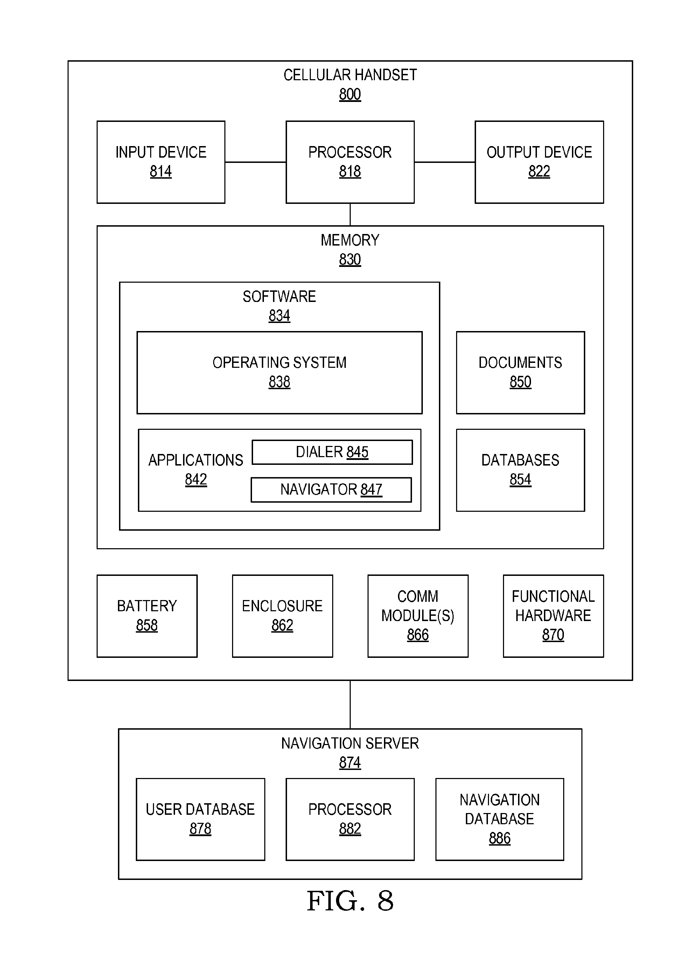

Step **203** of Fig. 2A is not explicitly included, since the keypad used may be based on hard keys (see Fig. 8), or voice commands may be used. Data entry in a step **205B** can be made by a soft key, a hard key, or by a voice command. The branch from step **205B** to a step **233B** relates to switching to any keyboard or respective application that allows entries that use the full alphabet, and is not restricted to the Contacts application illustrated in Fig. 2A. The database searched in step **213B** may reside either in the mobile device, such as in an address book, or in a remote database hosted on a server, such as in an online navigation service. And a step **229B** is not limited to placing a call, but can be any operation that uses a search result as in input. Non-limiting examples include displaying an address from an address book and navigating to an address retrieved from a navigation server.

### EXACT AND PARTIAL MATCHING

Fig. 2C illustrates a method for matching according to an embodiment of the invention. In a step **241,** the definition of the selected alphabet subset is received by a processor, such as processor **818** of cellular handset **800** (Fig. 8). In a non-limiting example, the subset is the set of vowels {"A", "E", "I", "O", "U"}.

In a step **245,** an input search string is received from a user, and includes a sequence of characters entered so far by the user. In a step **249,** a database record is retrieved for examination, to determine whether there is an exact of partial match with the input search string of step **245.** In a step **251,** a predetermined function of search fields (for example, the concatenation **<first_name>** + **<last_name>)** is associated with the database record schema, which may include other fields of data that are not presently searched, such as **<address>, <company>,** etc. The term "*search field*" herein denotes any field of a database record which is used to determine whether the record should be retrieved in a search according to a search string. Preferably, a predetermined function of search fields is used to determine a match with a user-input search string. As an example, the fields **<first_name>** and **<last name>** are considered search fields, while **<first_name>+<last_name>** concatenated (i.e. the full name) are the predefined function serving for identifying matches with search strings entered by the user. It will noted, that some programmers or some users may prefer **<last_name>+<first_name>** as the predefined function, which may be fine, as long as the user is aware of the search strings that he is supposed to enter for seeking matches. In a step **255** a record identifier representing the present record is formed by extracting the alphabet's subset characters (in certain embodiments, the vowels) from the fields of the record according to the predetermined function of search fields, while retaining their order. In the present example, the record identifier of the record having **<first_name> = "William"** and **<last name> = "Smith"** is the extracted vowels of "WilliamSmith", i.e., the record identifier is "IIAI" (converted to uppercase for case-insensitivity). In a step **259,** the record identifier is compared to the input search string of step **245,** and if they are equal, an *exact match* is identified in a step **263.** If there is no exact much, but the input search string equals the beginning of the record identifier (for example, an input search string "IIA" equals the beginning of the record identifier "IIAI"), then a *partial match* is identified in a step **271.** If neither an exact much nor a partial match is identified, then *no match* is identified in a step **275.** The process then loops from a step **279** to search for additional matches through the entire database.

According to related embodiments of the invention, an alternative, more efficient method for identifying exact and partial matches is based on dividing the method shown in Fig. 2C into a preparatory method and a matching method. The preparatory method is executed during the setup and maintenance of the database, where the database is extended to include a record identifier field for each record, by repeating steps **249 - 255** for all the records of the database and adding or associating the result of step **255** with the respective record. Then, whenever a search for matches is run, steps **249 - 255** of Fig. 2C are replaced by a single step of "retrieve record identifier from database record", with the rest of the process remaining the same as in steps **259 - 279.**

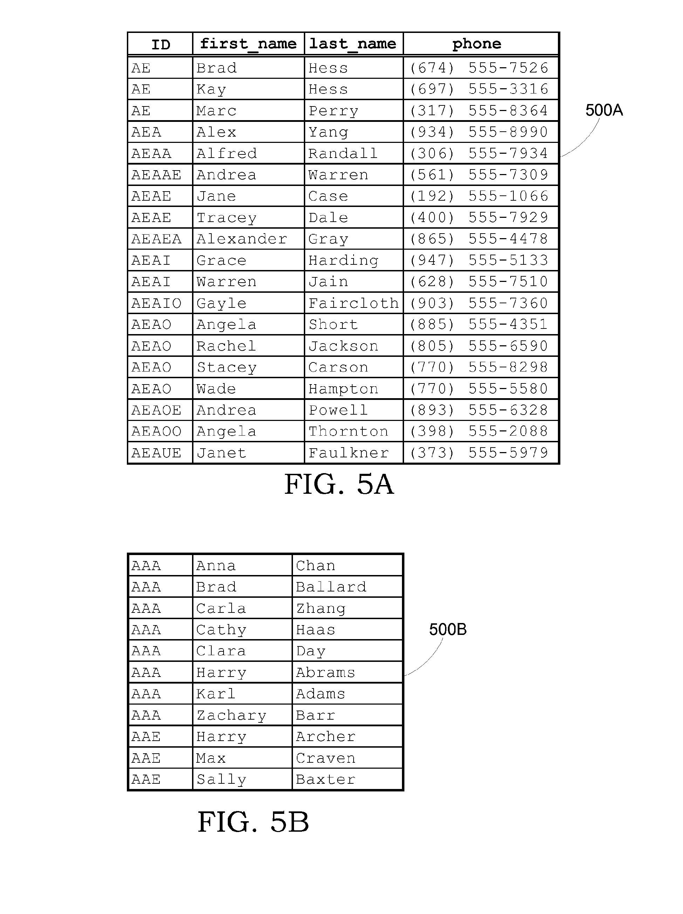

It will be appreciated that the above methods are non-limiting embodiments of the present invention which further clarify the concepts of *exact match*, *partial match* and *no match,* and are not meant to represent efficient algorithms or restrict the matching method in any way. Further elaboration of the matching concept is demonstrated with reference to Figs. 5A - 5B below.

### RESULTS DISPLAY AND FURTHER SELECTION

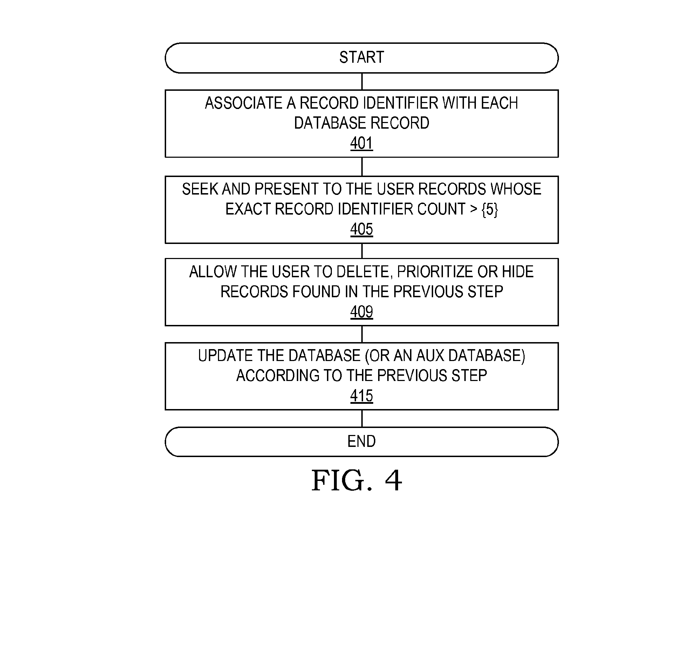

Figs. 3A - 3D conceptually illustrate exemplary displays that result from the method illustrated in Fig. 2A. A display **300A** pertains to a case in which a user has entered the search string (of vowels ) "IA", and where the results of step **215** or step **217** include more names than comfortably fit on a single screen shown in Figs. 3A - 3D (in this non-limiting example, five). In this case, the first five names (according to the ordering policy, see Fig. 4 below) are displayed as buttons **303A - 311A,** while a button **302** provides both an indication of having more names on the next page(s), as well as a means for moving to the next page. The user may press any of the name buttons for dialing to the respective person; press button **302** for moving to the next page; or press "Restart" to restart the method (Fig. 2A), in case of mistype or other input error that leads to incorrect results. In some implementations, the user may swipe the screen instead of pressing button **302** in order to scroll to the next page. Fig. 3A also demonstrates highlighting either the first or the last name to conveniently distinguish it from other names in the same list of search results (including names in the following screen(s)). Thus, since "Bill" and "Billy" are close, the last name is highlighted, while, for the other names shown in Fig. 3A, the first names are highlighted, as may be convenient for many users.

A display **300B** as shown in Fig. 3B is applicable to the case where the search has yielded no more names than comfortably fit on a single screen, whereupon button **302** is not shown on display **300A.**

A display **300C** as shown in Fig. 3C pertains to the case where a contact person has more than one telephone number (such as for home, work, and mobile telephones). In this case, a user that has pressed, for example, the "Kim Day" button in either display **300A** or display **300B** will see display **300C** for selecting among these options by pressing a "Home" button **313,** a "Work" button **315,** or a "Mobile" button **317.**

A display **300D** as shown in Fig. 3D pertains to the case where a search has yielded only a single name. If the respective person is associated with only a single phone number, then the person's name will appear or a single button in display **300B,** for final user approval before placing a call. If, however, the retrieved contact ("Geoffrey Sparks" in this non-limiting example) has both work and mobile phone numbers, then display **300D** allows the user to select the appropriate number to dial.

### SETUP AND MAINTENANCE OF A DATABASE

In certain embodiments of the invention, the database from which data is extracted (e.g., a contact database or a navigation database), is hosted in the memory of the mobile device. In other embodiments, the database is hosted in a remote server. According to various embodiments, additional preparatory steps are taken to ease the retrieval of data by excluding some records from the search procedure and/or prioritizing the order of presenting certain search results. Depending on the host location of the database, such steps are executed in the mobile device and/or the remote server.

Following the non-limiting example of a maximum of five matches to be displayed on the screen (see Figs. 2A - 2B and Fig. 3A), it is desirable to complete a search with not more than five matches. When this goal cannot be accomplished, the content of the first screen and the order of presenting results in the following screens, may negatively impact the convenience in finding a sought record. The embodiment described in the following description pertains to a contact database hosted in a mobile device, but is extendible to any database that can be hosted in a device or in a remote server. The following method may be conveniently carried out by using a personal computer, with the results copied into a mobile device.

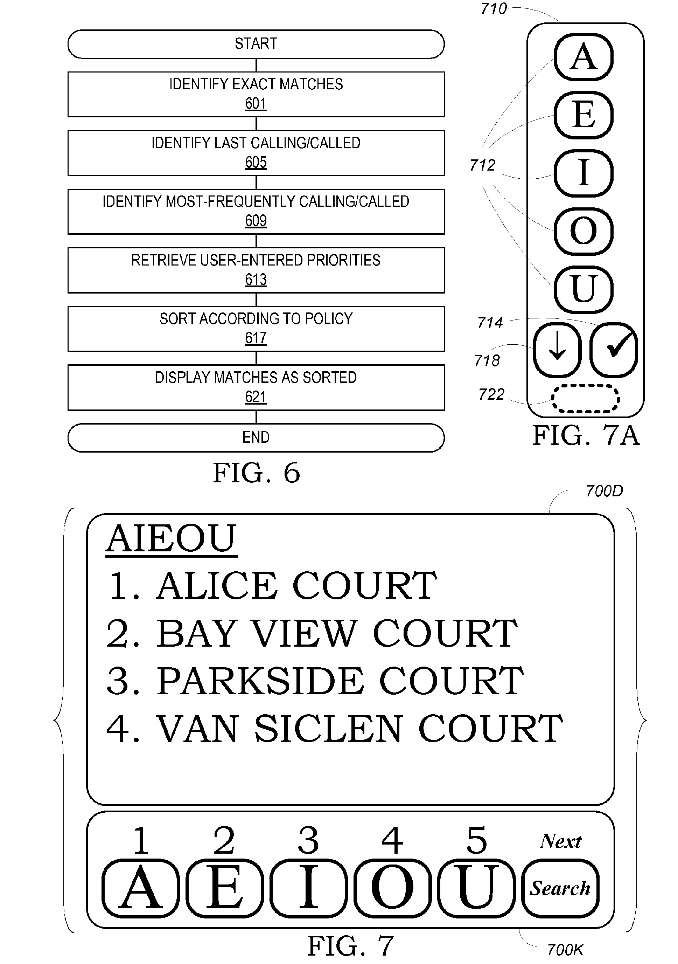

Reference is now made to Fig. 4. In a step **401,** all the records of a database (in a non-limiting example, a contact database hosted in a mobile device) are processed to extract a record identifier for each record. The record identifier is a string of all characters of the alphabet subset (for example, vowels), extracted from a predetermined function of search fields, in a non-limiting example the concatenation **<first_name>** + **<last_name>.** Non-limiting examples of record identifiers of several database records is shown in a table **500A** of Fig. 5, with "AE" being the record identifier of *Brad Hess* and "AEAIO" being the record identifier of *Gayle Faircloth.* As is further demonstrated by table **500A,** many record identifiers are similar for multiple names, the number determined by the size and specific content of the database. A step **405** seeks record identifiers associated with more than five records (in this non-limiting example), i.e. that require more than a single screen to display, and the respective names are then presented to the user. The user may then recognize that some of the records are obsolete, while some others, e.g. overseas contacts, are unlikely to be called by the user using the methods of the present disclosure. In a step **409** the user may delete obsolete records and tag some other records as hidden, i.e. excluded from the list of search results of the methods illustrated in Figs. 2A - 2B. If the remaining names for the record identifier under consideration are more than five, the user may select the five records to be included in the first screen, and prioritize the order of appearance of other names in the following screens. In a step **415** the user's selections for hiding and/or prioritizing the appearance order of selected names are recorded either in the contact database, or in an auxiliary database, and such selections are accessed in a step **221** (Fig. 2A or Fig. 2B) for exhibiting the search results to the user (see further discussion with reference to Fig. 6 below.)

### PARTIAL AND EXACT MATCHES

Table **500A** of Fig. 5A illustrates a non-limiting arbitrary segment of a contact database, where the first column ("ID") shows the record identifier of each record, which is formed by extracting all alphabetic subset characters (vowels in the present example) from the predetermined function of search fields **(<first_name>** + **<last_name>** in this example). The record identifiers shown in the first column are *exact,* in the sense that they include *all* the vowels of the respective search screens. Thus, "AE" is the exact match of the first three records. It shall be notices also that all 16 names in table **500A** following *Alex Yang* include the string "AE" as a *partial match,* because their first two vowels are "AE".

Step **213** (Figs. 2A - 2B) seeks matches that can be either exact or partial, and step **219** display matches (five or less, in this non-limiting example), even if they are partial matches. In the example of table **500A,** entering "AE" or "AEA" will not lead to a display of the names (step **219)** because the number of matches (both exact and partial) exceeds five, while "AEAE" will lead to a display of three names - two exact matches and one partial match.

A table **500B** in Fig. 5B demonstrates the notion of database exhaustion (step **217** of Figs. 2A-2B). Entering the string "AAA" yields eight names, which are too many for a single-screen display. On the other hand, in the present example there are no entries in the database that are or start with "AAAA", "AAAE", "AAAI", "AAAO" or "AAAU". Accordingly, step **217** leads directly to an immediate two-screen display of the eight names without waiting for another keystroke, because no additional vowel entries can narrow the search in the database of Fig. 5B.

### ORDERING RECORDS ON MULTIPLE SCREENS

When the number of search results to be displayed on the screen exceeds the predetermined capacity of a single screen (five names in the non-limiting examples illustrated in Figs. 2A - 2B), a multi-page display of names is required. The order of the displayed names, and particularly the names selected for the first screen, further contribute to the convenience afforded by embodiments of the present invention.

Fig. 6 illustrates a method according to various embodiments of the invention for determining the display order of names matching the search string of alphabet subset characters entered by the user (vowels in the present non-limiting example). A step **601** identifies exact matches for the search string, for assigning higher priority than partial matches. Assigning a higher priority for exact matches is especially meaningful upon reaching step **215** (Figs. 2A - 2B), where no additional keystrokes are expected. Under such circumstances, as with the example illustrated by table **500A** of Fig. 5A, a user entering the keystrokes "AE" followed by "Search" into keypad **100A** will see on the first screen the three exact matches for "AE" (Fig. 5A) even if they are not the first in the list of alphabetically-sorted names. It may happen that a large number of names have partial matches for certain search strings (in this example, all the names in table **500A** are a partial match for "AE"). The rationale behind assigning a higher priority for exact matches is that the user could enter additional characters to narrow the search, but decided not to use this option.

A step **605** identifies matched names that also appear in the phone's call log (which is customary in cellular phones) as the most recent incoming/outgoing calls, while a step **609** identifies in the call log numbers that have called or have been called most frequently within the most recent month, for example. A step **613** retrieves user preferences regarding name display priorities, such as those entered in step **409** (Fig. 4). In a step **617** the results of steps **601, 605, 609** and **613** are taken into account, according to a policy determined by the application programmer or by user preferences, to determine which names are displayed on the first page, and how names are ordered on all pages. Such policies may be, for example, *last calling*/*called numbers are of the highest priority*, or *exact matches will always be first to display.* In a step **621,** the matches, as sorted by step **617,** are displayed in a multiple-screen arrangement (for example, first page as shown by display **300A** of Fig. 3A, with button **302** included for selectably moving to the next pages).

### USING HARD KEYS

All the previously-disclosed embodiments and examples use a touchscreen as both an input and output device. However, other embodiments of the invention may use hard keys in cooperation with a touchscreen or a screen that is not touch sensitive. For example, a small hard keypad may be embedded in the hub of a vehicle steering wheel, with a multimedia screen in the dashboard for displaying search results and multimedia data included in database records.

Fig. 7 illustrates an embodiment of the invention featuring a navigation arrangement for a motor vehicle, wherein a keypad **700K** is embedded in the hub of the steering wheel, and a screen **700D** is the vehicle's multimedia screen. Keypad **700K** includes five vowel keys and a "Search" key. In a non-limiting example utilizing this embodiment, the user has pressed the string of vowels "AIEOU", and the vehicle's navigation system accesses a street name database that may be hosted locally (i.e. embedded in the vehicle) or in a remote navigation server, and retrieves the four matches displayed on screen **700D.** The user then presses the same hard keys, which also serve for inputting the numerals 1 - 5, to make a selection, or touches the desired street name on screen **700D,** when screen **700D** is a touchscreen.

Fig. 7A illustrates is a remote control unit **710** according to another embodiment of the invention, where keys **712** provide touch input for search strings, a button **714** functions as a "Search" button, and a button **712** functions as a "Next" button. A microphone **722** receives voice input when the user employs voice mode (described below). Remote control unit **710** may form part of a Bluetooth earpiece, or be mounted in the vehicle steering wheel.

### VOICE COMMANDS

As noted in the Background section above, certain embodiments of the present invention teach an alternative to voice commands. In other embodiments of the invention, however, voice commands replace part or all of the screen and keypad functionalities previously described.

Some users who find that conventional voice commands do not work for them, for example, because of their accent, find it practical and desirable to train their portable device to accurately recognize a limited vocabulary using their own accent, or even using a foreign language. Using training methods and technologies known in the art, users may find it convenient to train their mobile device to recognize seven voice commands that are equivalent to pressing the seven soft keys of Fig. 1A. According to an embodiment of the present invention, a screen similar to display **700D** (Fig. 7) is displayed in response to such voice commands, and the system accepts further selection by the user via simple voice commands (e.g., numerals 1-5 and "next") which the mobile device is trained to recognize, even when spoken with an accent or in a foreign language.

In related embodiments of the invention, synthesized speech is used to supplement or replace screen display. Thus, in a non-limiting example, 1 - 5 search results may be read through a loudspeaker, from which the user may select by repeating one of the read results, or by saying a numeral that identifies a result by its position in the read sequence of results.

### HARDWARE

Fig. 8 is a hardware block diagram according to an embodiment of the present invention, for implementing the data retrieval methods described above in a mobile telephone.

A cellular handset **800** includes a processor **818** that executes the steps of the methods illustrated in Figs. 2A, 2B, 4, and 6, and controls the I/O (input/output) operations via an input device **814** and an output device **822.** In a related embodiment, input device **814** and output device **822** include a touchscreen such as illustrated in Figs. 1A - 1D and 3A - 3D. Further related embodiments, also include a speaker, hard keys, a pointing device, a vibration generator, and other I/O devices known in the art. A memory **830** is a nonvolatile memory device (random-access memory is typically included in processor **818** and is not shown separately herein). Memory (e.g., a storage device) **830** stores software **834** that is executed by processor **818** and includes an operating system **838** and applications **842.** At least one of applications **842** includes code for executing the methods described in Figs. 2A, 2B, 4, and/or 6. In certain embodiments, applications **842** include a dialer application **845** and/or a navigator application **847.** Memory **830** also stores documents **850** and databases **854** that include, for example, a contact database and/or a navigation database from which data is retrieved according to the disclosed embodiments. In additional embodiments, functional hardware **870** includes, but is not limited to, components such as a GPS chip, a camera, accelerometers, etc., which may participate in previously-disclosed methods. For example, the GPS chip may participate in a navigation session to a destination retrieved from a database according to embodiments of the invention. Communication module(s) **866** include chips and transducers for communication functionalities such as cellular, Wi-Fi, Bluetooth, infrared and NFC communication. A battery **858** energizes all the units of cellular handset **800,** and an enclosure **862** physically holds and protects all hardware units as a portable appliance.

In some embodiments, servers connected via a cellular or Wi-Fi network maintain a database and take part in the execution of methods described above. As a non-limiting example, a navigation server **874** includes a processor **882** that is programmed to manage an online navigation session of a user of cellular handset **800.** In specific embodiments, processor **882** is programmed to execute the method shown in Fig. 2B, according to a vowel search string entered by the user into input device **814** for retrieving data from navigation database **886.** In a related embodiment, processor **882** is programmed to participate with cellular handset **800** during the execution of the method of Fig. 4, and then store the user preferences in the user's records within user database **878.**

While the invention has been described with respect to a limited number of embodiments, it will be appreciated by persons skilled in the art that the present invention is not limited by what has been particularly shown and described herein. Rather the scope of the present invention includes both combinations and sub-combinations of the various features described herein, as well as variations and modifications which would occur to persons skilled in the art upon reading the specification and which are not in the prior art.

## Claims

1. A method for retrieving data from a database, the database including a plurality of database records, each database record having one or more text fields containing ordered characters from an alphabet, the method comprising:
• identifying to a user a predefined subset of the alphabet, the subset consisting of no more than the smaller of: half of the alphabet or sixteen characters of the alphabet;
• receiving from the user a sequence of one or more characters of the subset;
• retrieving, by a processor, a non-negative integer number of database records, wherein each retrieved database record includes the characters of the sequence interspersed within a predefined function of at least one text field of the database record, such that the interspersed characters appear in the same order as the characters of the sequence; and
• if the non-negative integer number is at least one, presenting the retrieved database records to the user.

2. A method according to claim 1, wherein the database is a contact database and the predefined function concatenates name fields of the database record.

3. A method according to claim 1, wherein the identifying includes displaying the subset as a keypad on a touch screen.

4. A method according to claim 1, wherein the identifying includes displaying the subset on a set of physical keys of a hard keypad.

5. A method according to claim 1, further comprising: if the integer number is at least two, receiving a user selection that selects a single database record from the integer number of retrieved database records.

6. A method according to claim 1, wherein the alphabet is the Roman alphabet, the subset includes the characters a,e,i,o, and u, and the keypad further includes at least one control key.

7. A method according to claim 1, wherein the alphabet is other than the Roman alphabet and the subset includes the vowels of the alphabet.

8. A method according to claim 2, further comprising:
• receiving a user input that selects a selected database record from the retrieved database records;
• extracting an address from the selected database record; and
• initiating a communication session according to the address.

9. A method according to claim 8, wherein the communication session includes one of: a telephone call, a short text message, an email, an instant messaging session, a social network message, or a multimedia message.

10. A mobile communication device comprising:
• a communication module;
• a storage device storing a contact database, the database including a plurality of database records, each database record including a contact identifier in the form of an ordered set of characters from an alphabet, and address data;
• an input device identifying to a user a predefined subset of the alphabet, the subset consisting of no more than the smaller of: half of the alphabet or sixteen characters of the alphabet; and
• a processor programmed to initiate a communication session by:
o receiving from the input device a sequence of one or more characters of the subset,
o retrieving a non-negative integer number of database records, wherein each retrieved database record includes the characters of the sequence interspersed within the contact identifier of the retrieved database record, such that the interspersed characters appear in the same order as the characters of the sequence, and
o if the non-negative integer number is at least one, then:
■ identifying to the user the retrieved database records,
■ receiving from the input device a command related to a selected record of the retrieved database records, and
■ activating the communication module for initiating a communication session according to address data included in the selected record.

11. A mobile communication device according to claim 10, wherein the communication session includes one of: a telephone call, a short text message, an email, an instant messaging session, a social network message, or a multimedia message.

12. A mobile communication device according to claim 10, wherein the input device is a soft keypad that includes the subset characters displayed on a touch screen.

13. A mobile communication device according to claim 10, wherein the subset includes vowels of the alphabet.

14. A mobile communication device according to claim 13, wherein the input device is a hard keypad including physical keys for entering the vowels of the alphabet.

15. A keypad for entering by users a sequence of characters from an alphabet, the keypad consisting of no more than the smaller of: half of the alphabet's number of characters or sixteen, wherein a plurality of the hard keys are for entering the vowels of the alphabet.
